(19) Europäisches Patentamt
European Patent Office
Office européen des brevets

(11) **EP 3 582 383 B1**

(12) **EUROPEAN PATENT SPECIFICATION**

(45) Date of publication and mention
of the grant of the patent:
**11.05.2022 Bulletin 2022/19**

(21) Application number: **19179355.3**

(22) Date of filing: **11.06.2019**

(51) International Patent Classification (IPC):
**H02M 3/158** (2006.01)

(52) Cooperative Patent Classification (CPC):
**H02M 3/1584; H02M 1/0095; H02M 3/1586**

(54) **POWER CONVERTER**

STROMWANDLER

CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2018 CN 201810612057**

(43) Date of publication of application:
**18.12.2019 Bulletin 2019/51**

(73) Proprietor: **Silergy Semiconductor Technology
(Hangzhou) Ltd
Hangzhou, Zhejiang 310012 (CN)**

(72) Inventors:
• **ZHANG, Wang
ZHEJIANG, 310012 (CN)**

• **ZHAO, Chen
ZHEJIANG, 310012 (CN)**

(74) Representative: **Ström & Gulliksson AB
P.O. Box 793
220 07 Lund (SE)**

(56) References cited:
**US-A1- 2006 087 295      US-A1- 2011 227 546
US-A1- 2015 002 115      US-A1- 2017 019 014**

• **WANG WEIYIN ET AL: "A high-efficiency
full-wave CMOS rectifying charge pump for RF
energy harvesting applications",
MICROELECTRONICS JOURNAL, vol. 46, no. 12,
2015, pages 1447-1452, XP029339203, ISSN:
0026-2692, DOI: 10.1016/J.MEJO.2015.08.001**

## Description

## FIELD

The present disclosure relates to power electronic technologies, and in particular to a power converter.

## BACKGROUND

With the continuous development of society, energy shortage becomes a primary problem at present. The Power electronic technology is rapidly developed in recent years. Currently, a power converter having a high gain is an important element used in the energy usage.

In the conventional technology, the cascade connection is commonly utilized to achieve a high gain of the power converter, which may result in a large ripple of an output voltage and require a large output capacitance.

In a patent application No. US 2015/0002115 A1, a series-capacitor adaptively switched power conversion system includes, for example, a series-capacitor buck converter overlapping controller. The series-capacitor buck converter overlapping controller is arranged to provide reduced switching losses and improved system efficiency while the switched power conversion system is operating in a discontinuous conduction mode (DCM). While operating in the DCM, the series-capacitor buck converter overlapping controller generates precisely controlled frequency modulated waveforms that are adapted to independently drive control switches of one or more power converters. The series-capacitor buck converter overlapping controller is arranged to reduce (or eliminate) negative inductor current (and the associated conduction loss) that can be present in multiphase (two or more phases) series-capacitor buck converters.

In a patent application No. US 2017/0019014 A1, a method and controller for controlling a power converter having multiple stacked power cells are provided. The method includes controlling the multiple stacked power cells using a common mode control parameter as well as a differential mode control parameter that controls a voltage of a connection terminal between respective power cells of the plurality of stacked power cells.

## SUMMARY

In view of this, a power converter is provided in the present disclosure, to reduce a ripple of an output voltage and reduce a required output capacitance. Further, the power converter has a high gain and an adjustable stabilized output voltage. The invention is defined by independent claim 1.

The power converter provided in the present disclosure includes:

a first terminal and a second terminal;

N first switching power stage circuits, each including a first energy storage element, where N is greater than or equal to 1;
one second switching power stage circuit; and
N second energy storage elements, where each of the N second energy storage elements is coupled to one of the N first switching power stage circuits corresponding to the second energy storage element;
a first terminal of a first first switching power stage circuit among the N first switching power stage circuits is coupled to the first terminal of the power converter, and a second terminal of each of the N first switching power stage circuits is connected to the second terminal of the power converter; and
the second switching power stage circuit is coupled between a terminal of one of the N second energy storage elements corresponding to the second switching power stage circuit and the second terminal of the power converter, the one of the N second energy storage elements is capable of serving as a power supply to supply power to the second terminal of the power converter via the second switching power stage circuit.

In an embodiment, energy storage parameters of first energy storage elements of the N first switching power stage circuits and the N second energy storage elements are set to control the N first switching power stage circuits to meet inductor volt-second balance.

In an embodiment, in a case that N is greater than 1, an n-th first switching power stage circuit among the N first switching power stage circuits is coupled between a terminal of an (n-1)-th second energy storage element among the N second energy storage elements and the second terminal of the power converter, and a j-th second energy storage element among the N second energy storage elements is coupled between a j-th first switching power stage circuit among the N first switching power stage circuits, and a ground, where n=2, 3,..., N, and j=1, 2, ..., N.

In an embodiment, the power converter further includes:

N first transistors, where

each of the N second energy storage elements is coupled to the first switching power stage circuit corresponding to the second energy storage element via one of the N first transistors connected in series with the second energy storage element.

In an embodiment, each of the N first switching power stage circuits further includes:
a second transistor connected between a first terminal of the first switching power stage circuit and the first energy storage element.

In an embodiment, each of the N first switching power stage circuits further includes:

a third transistor connected between the first energy storage element and a ground; and

a first magnetic element connected between the first energy storage element and the second terminal of the power converter.

In an embodiment, the second switching power stage circuit includes:

a fourth transistor and a fifth transistor that are connected between the second energy storage element corresponding to the second switching power stage circuit and the ground; and

a second magnetic element connected between the second terminal of the power converter and a terminal being a common terminal between the fourth transistor and the fifth transistor.

In an embodiment, the first terminal of the power converter is configured as an input terminal of the power converter to receive an input voltage, and the second terminal of the power converter is configured as an output terminal of the power converter to generate an output voltage.

In an embodiment, the second terminal of the power converter is configured as an input terminal of the power converter to receive an input voltage, and the first terminal of the power converter is configured as an output terminal of the power converter to generate an output voltage.

In an embodiment, phase-shift control is performed on operation states of the N first switching power stage circuits and the second switching power stage circuit.

In an embodiment, the second transistor of each of the N first switching power stage circuits has a same duty cycle as the fourth transistor; a switching state of the second transistor is complementary to a switching state of the third transistor; a switching state of the fourth transistor is complementary to a switching state of the fifth transistor; a switching state of a j-th first transistor among the N first transistors is complementary to a switching state of a third transistor of a j-th first switching power stage circuit among the N first switching power stage circuits, where j=1, 2, 3, ..., N, and the power converter is configured to adjust the duty cycle of the second transistor to generate a stabilized output voltage.

In an embodiment, in a case that N is greater than 1, there is a same phase difference between conduction timings of adjacent second transistors among the N second transistors, and there is the same phase difference between a conduction timing of an N-th second transistor among the N second transistors and a conduction timing of the fourth transistor.

In an embodiment, the phase difference is 360°/ (N+1).

In an embodiment, in-phase control is performed on operation states of the N first switching power stage circuits and the second switching power stage circuit.

In an embodiment, the second transistor of each of the N first switching power stage circuits has a same switching state as the fourth transistor, the third transistor of each of the N first switching power stage circuits has a same switching state as the N first transistors and the fifth transistor, and the switching state of the third transistor is complementary to the switching state of the second transistor, and the power converter is configured to adjusting a duty cycle of the second transistor to generate a stabilized output voltage.

In an embodiment, each of the third transistor and the fifth transistor is a rectification switch; or each of the third transistor and the fifth transistor is replaced with a diode.

In an embodiment, at least one of first magnetic elements of the N first switching power stage circuits is coupled with the second magnetic element; and/or at least two of first magnetic elements of the N first switching power stage circuits are coupled with each other.

With technical solutions provided in the present disclosure, at least one first switching power stage circuit and one second switching power stage circuit are arranged between an input terminal and an output terminal of the power converter. The at least one first switching power stage circuit is in interleaving connection with the second switching power stage circuit. In this way, the ripple of the output voltage is reduced, and the required output capacitance is reduced. Further, the power converter provided in the present disclosure has a high gain and an adjustable stabilized output voltage.

**BRIEF DESCRIPTION OF THE DRAWINGS**

The above and other objects, features and advantages of the present disclosure become more apparent from the following description described in conjunction with the drawings. In the drawings:

Figure 1 shows a schematic circuit diagram of a power converter according to a first embodiment of the present disclosure;

Figure 2 shows an operation waveform diagram of the power converter according to the first embodiment of the present disclosure;

Figure 3 shows an operation waveform diagram of the power converter according to the first embodiment of the present disclosure;

Figure 4 shows a schematic circuit diagram of a power converter according to a second embodiment of the present disclosure;

Figure 5 shows an operation waveform diagram of the power converter according to the second embodiment of the present disclosure;

Figure 6 shows a schematic circuit diagram of a power converter according to a third embodiment of the present disclosure;

Figure 7 shows a schematic circuit diagram of a power converter according to a fourth embodiment of the present disclosure;

Figure 8 shows a schematic circuit diagram of a power converter according to a fifth embodiment of the present disclosure; and

Figure 9 shows a schematic circuit diagram of a power converter according to a sixth embodiment of the present disclosure.

## DETAILED DESCRIPTION OF EMBODIMENTS

The present disclosure is described below based on embodiments, and the present disclosure is not limited to the embodiments. In the following description of the present disclosure, specific details are described in detail. The present disclosure can be fully understood by those skilled in the art without the description of these details. Well-known methods, processes, flows, components and circuits are not described in detail to avoid obscuring the essence of the present disclosure.

Further, it should be understood by those skilled in the art that, the drawings herein are only for illustration, and the drawings are not necessarily drawn to scale.

It should further be understood that in the following description, a "circuit" indicates a conductive loop formed by at least one component or sub-circuit by electrical connection or electromagnetic connection. In a case that a component or circuit is described as being "connected to" another component or being "connected" between two terminals, the component or circuit may be coupled or connected to another component directly or via an intermediate component. The connection between the two components may be physical connection, logical connection, or a combination thereof. In addition, in a case that the component is described as being "directly coupled to" or "directly connected to" another component, it is indicated that no intermediate component exists between the two components.

Unless otherwise indicated in the context, the words "including", "comprising", and the like, in the specification and the claims, should be interpreted as being inclusive rather than being exclusive or exhaustive, i.e., "including but not limited to".

In the description of the present disclosure, it should be understood that, the terms "first", "second", and the like are only used herein to distinguish one entity or operation from another, and are not to be construed as indicating or implying relative importance. In addition, in the present disclosure, the word "multiple" indicates two or more unless otherwise specified.

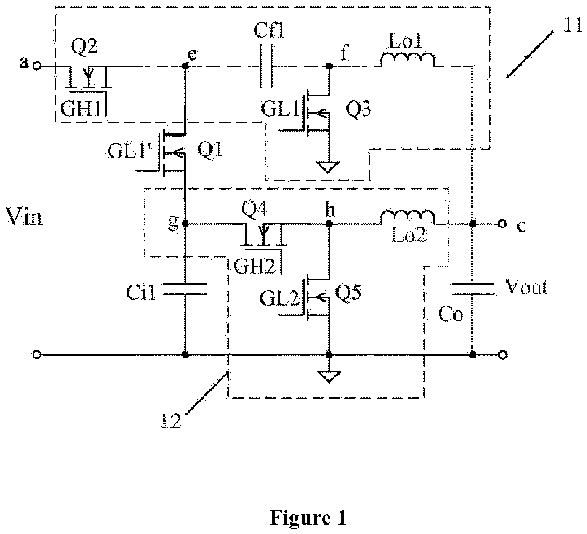

Figure 1 shows a schematic circuit diagram of a power converter according to a first embodiment of the present disclosure. As shown in Figure 1, the power converter in this embodiment includes an first switching power stage circuit 11, a second switching power stage circuit 12, a first terminal a, a second terminal c, a second energy storage element Cil, a transistor Q1, and an output capacitor Co. In this embodiment, the first terminal a is configured as an input terminal of the power converter to receive an input voltage Vin. The second terminal c is configured as an output terminal of the power converter to generate an output voltage Vout.

A first terminal of the first switching power stage circuit 11 is coupled to the first terminal a, and a second terminal of the first switching power stage circuit 11 is coupled to the second terminal c. The first switching power stage circuit 11 includes a transistor Q2, a transistor Q3, a first energy storage element Cf1, and a first magnetic element Lo1. The transistor Q2 is connected between the first terminal a and a terminal e. The first energy storage element Cf1 is connected between the terminal e and a terminal f. The first magnetic element Lo1 is connected between the terminal f and the second terminal c. The transistor Q3 is connected between the terminal f and a ground terminal. The terminal e is a common terminal between the transistor Q2 and the first energy storage element Cf1. The terminal f is a common terminal between the first energy storage element Cf1 and the first magnetic element Lo1.

The second energy storage element Cil is coupled to the first switching power stage circuit 11. As shown in Figure 1, one terminal g of the second energy storage element Cil is coupled to the terminal e via the transistor Q1 connected in series with the second energy storage element Cil, and the other terminal of the second energy storage element Cil is connected to the ground terminal.

The second switching power stage circuit 12 is coupled between the terminal g of the second energy storage element Cil and the second terminal c. The second switching power stage circuit 12 includes a transistor Q4, a transistor Q5, and a second magnetic element Lo2. The transistor Q4 and the transistor Q5 are connected between the terminal g and the ground terminal. The second magnetic element Lo2 is connected between a terminal h and the second terminal c. The terminal h is a common terminal between the transistor Q4 and the transistor Q5.

In an embodiment, each of the transistor Q3 and the transistor Q5 is a rectification switch, such as a metal-oxide-semiconductor field effect transistor (MOSFET), a bipolar junction transistor (BJT), and an insulated gate bipolar transistor (IGBT). In another embodiment, each of the transistor Q3 and the transistor Q5 is replaced with a diode.

Further, energy storage parameters of the first energy storage element Cf1 and the second energy storage element Cil are set to control the first switching power stage circuit 11 to meet inductor volt-second balance, i.e., to control the first magnetic element Lo1 to be in a stable state. That is, the amount of change in a current of the first magnetic element Lo1 during a switching period is controlled to be approximately zero.

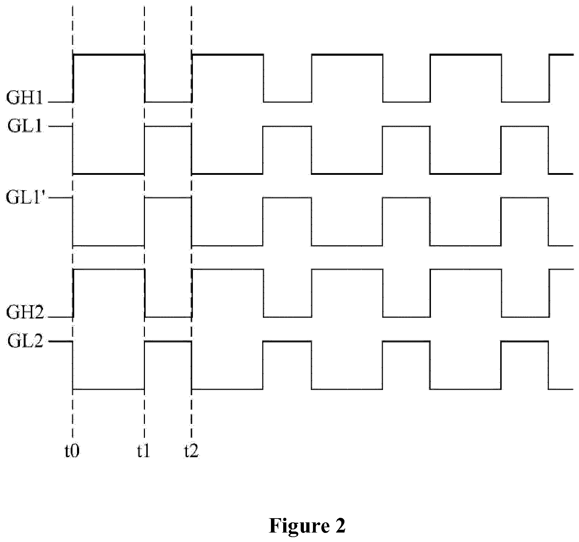

Figure 2 shows an operation waveform diagram of the power converter according to the first embodiment of the present disclosure. As shown in Figure 2, in this embodiment, the power converter is configured to perform in-phase control on operation states of the first switching power stage circuit 11 and the second switching power stage circuit 12. Under the in-phase control, the transistor Q2 is controlled to have a same switching state as the transistor Q4, and the transistor Q3 is controlled to have a same switching state as the transistor Q5, where the switching state of the transistor Q2 is complementary to the switching state of the transistor Q3. As shown in Figure 2, a switching control signal GH1 for the transistor Q2 is the same as a switching control signal GH2 for the transistor Q4 (that is, the transistor Q2 and the transistor Q4 have the same switching state and the same duty cycle). A switching control signal GL1 for the transistor Q3 is the same as a switching control signal GL2 for the transistor Q5. The switching control signal GH1 for the transistor Q2 is complementary to the switching control signal GL1 for the transistor Q3. The switching control signal GH2 for the transistor Q4 is complementary to the switching control signal GL2 for the transistor Q5. A switching control signal GL1' for the transistor Q1 is the same as the switching control signal GL1 for the transistor Q3. In this case, the power converter in this embodiment is configured to adjust the duty cycle of the transistor Q2, to adjust the output voltage Vout and keep stabilization of the output voltage Vout.

The power converter in this embodiment has two states during a switching period. In a time period from t0 to t1, the switching control signal GH1 for the transistor Q2 and the switching control signal GH2 for the transistor Q4 are at a high level. In this case, the transistor Q2 and the transistor Q4 are turned on, and the transistor Q1, the transistor Q3, and the transistor Q5 are turned off. The first energy storage element Cf1 stores energy, and the current of the first magnetic element Lo1 is gradually increased. The second energy storage element Ci1, as a power supply, supplies power to a load via the second switching power stage circuit 12. A current of the second magnetic element Lo2 is gradually increased. In a time period from t1 to t2, the switching control signal GH1 for the transistor Q2 and the switching control signal GH2 for the transistor Q4 are at a low level. In this case, the transistor Q2 and the transistor Q4 are turned off, and the transistor Q1, the transistor Q3, and the transistor Q5 are turned on. The current of the first magnetic element Lo1 and the current of the second magnetic element Lo2 are gradually decreased. The first energy storage element Cf1, as a power supply, charges the second energy storage element Ci1, and the second energy storage element Ci1 stores energy.

Based on the characteristic of the inductor volt-second balance of the first switching power stage circuit and the second switching power stage circuit, the following relationships may be obtained.

$$(Vin-Vcf1)*D=Vout$$

$$Vci1*D=Vout$$

where Vin represents an input voltage, Vcf1 represents a voltage across the first energy storage element Cf1, D represents a duty cycle (i.e., a ratio of a conduction time of the transistor Q2 to the switching period) of the transistor Q2, Vci1 represents a voltage across the second energy storage element Ci1, and Vout represents an output voltage.

It can be seen from the connection relationship shown in Figure 1 that, in a case that the switching control signals GL1 and GL1' are at a high level, the first energy storage element Cf1 is connected in parallel to the second energy storage element Ci1. Thus, the voltage across the first energy storage element Cf1 is equal to the voltage across the second energy storage element Ci1, i.e., Vcf1=Vci1. Therefore, a relationship between the input voltage and the output voltage of the power converter in this embodiment may be expressed as the following formula:

$$\frac{Vout}{Vin}=\frac{D}{2}$$

In this embodiment, due to the interleaving connection and the in-phase control, the power converter has a high gain and an adjustable stabilized output voltage. Further, the control manner is simple and is easy to be achieved.

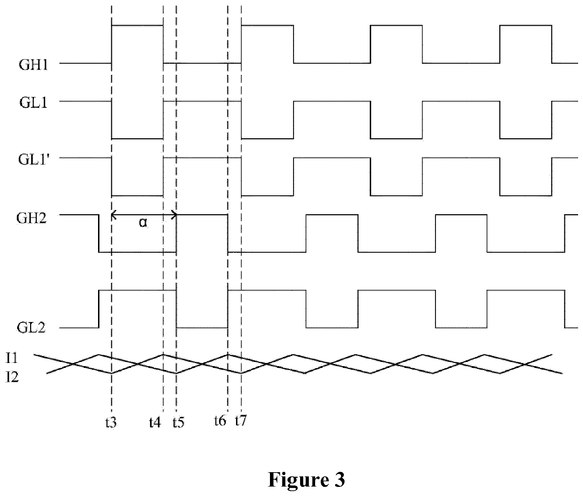

Figure 3 shows an operation waveform diagram of the power converter according to the first embodiment of the present disclosure. As shown in Figure 3, in this embodiment, the power converter is configured to perform phase-shift control on operation states of the first switching power stage circuit 11 and the second switching power stage circuit 12. Under the phase-shift control, conduction timings of the transistor Q2 and the transistor Q4 have a phase difference $\alpha$. In an embodiment, the phase difference $\alpha$ is 180°.

A switching state of the transistor Q2 is complementary to a switching state of the transistor Q3. A switching state of the transistor Q4 is complementary to a switching state of the transistor Q5. A switching state of the transistor Q1 is the same as the switching state of the transistor Q3. The transistor Q2 and the transistor Q4 have a same duty cycle D. In this case, the power converter in this embodiment is configured to adjust the duty cycle D to adjust the output voltage Vout and keep stabilization of the output voltage Vout. In this embodiment, the following description is given by taking the case that the duty cycle D is less than 0.5 as an example, i.e., D<0.5.

As shown in Figure 3, in a time period from t3 to t4, the switching control signal GH1 and the switching control signal GL2 are at a high level. In this case, the transistor Q2 and the transistor Q5 are turned on, and the transistor Q1, the transistor Q3 and the transistor Q4 are turned off. A current I1 of the first magnetic element Lo1 is increased, and a current 12 of the second magnetic element Lo2 is decreased. In a time period from t4 to t5, the switching control signal GL1, the switching control signal GL1' and the switching control signal GL2 are at a high level. In this case, the transistor Q1, the transistor Q3 and the transistor Q5 are turned on, and the transistor Q2 and the transistor Q4 are turned off. The current I1 of the first magnetic element Lo1 is decreased, and the current 12 of the second magnetic element Lo2 is decreased. In a time period from t5 to t6, the switching control signal GL1, the switching control signal GL1' and the switching control signal GH2 are at a high level. In this case, the transistor Q1, the transistor Q3 and the transistor Q4 are turned on, and the transistor Q2 and the transistor Q5 are turned off. The current I1 of the first magnetic element Lo1 is decreased, and the current 12 of the second magnetic element Lo2 is increased. In a time period from t6 to t7, the switching control signal GL1, the switching control signal GL1' and the switching control signal GL2 are at a high level. In this case, the transistor Q1, the transistor Q3 and the transistor Q5 are turned on, and the transistor Q2 and the transistor Q4 are turned off. The current I1 of the first magnetic element Lo1 is decreased, and the current 12 of the second magnetic element Lo2 is decreased. In the power converter according to this embodiment, due to the interleaving connection and the phase-shift control, the ripple of the output voltage can be reduced, and the required output capacitance can be reduced.

Based on the characteristic of the inductor volt-second balance of the first switching power stage circuit and the second switching power stage circuit, the following relationships may be obtained.

$$(Vin - Vcf1) * D = Vout$$

$$Vci1 * D = Vout$$

where Vin represents an input voltage, Vcf1 represents a voltage across the first energy storage element Cf1, D represents a duty cycle (i.e., a ratio of a conduction time of the transistor Q2 to the switching period) of the transistor Q2, Vci1 represents a voltage across the second energy storage element Ci1, and Vout represents an output voltage.

It can be seen from the connection relationship shown in Figure 1 that, in a case that the switching control signals GL1 and GL1' are at a high level, the first energy storage element Cf1 is connected in parallel to the second energy storage element Ci1, Thus, the voltage across the first energy storage element Cf1 is equal to the voltage across the second energy storage element Ci1, i.e., Vcf1=Vci1. Therefore, a relationship between the input voltage and the output voltage of the power converter in this embodiment may be expressed as the following formula:

$$\frac{Vout}{Vin} = \frac{D}{2}$$

In this embodiment, due to the interleaving connection and the phase-shift control, the ripple of the output voltage can be reduced, and the required output capacitance of the output capacitor Co can be reduced. Further, the power converter in this embodiment has a high gain and an adjustable stabilized output voltage.

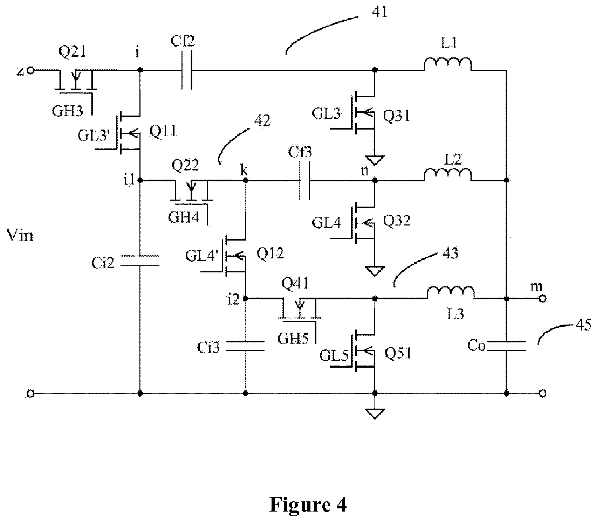

Figure 4 shows a schematic circuit diagram of a power converter according to a second embodiment of the present disclosure. As shown in Figure 4, the power converter in this embodiment includes an first switching power stage circuit 41, an first switching power stage circuit 42, a second switching power stage circuit 43, a first terminal z, a second terminal m, second energy storage elements Ci2 and Ci3, transistors Q11 and Q12, and an output capacitor Co. In this embodiment, the first terminal z is configured as an input terminal of the power converter to receive an input voltage Vin. The second terminal m is configured as an output terminal of the power converter to generate an output voltage Vout. Connection manners of the first switching power stage circuit 41 and elements (including a transistor Q21, a first energy storage element Cf2, a transistor Q31 and a first magnetic element L1) included in the first switching power stage circuit 41 are substantially the same as connection manners of the first switching power stage circuit 11 and elements included in the first switching power stage circuit 11 described in the first embodiment, and connection manners of the second switching power stage circuit 43 and elements (including a transistor Q41, a transistor Q51 and a second magnetic element L3) included in the second switching power stage circuit 43 are similar to connection manners of the second switching power stage circuit 12 and elements included in the second switching power stage circuit 12 described in the first embodiment, which are not repeated herein.

The second energy storage element Ci2 is coupled to the first switching power stage circuit 41. Specifically, one terminal i1 of the second energy storage element Ci2 is coupled to a common terminal i between the transistor Q21 and the first energy storage element Cf2 via the transistor Q11 connected in series with the second energy storage element Ci2, and the other terminal of the second energy storage element Ci2 is connected to a ground terminal.

In this embodiment, the first switching power stage circuit 42 is coupled between one terminal of the second energy storage element Ci2 and the second terminal m, i.e., between the terminal i1 and the terminal m. The first switching power stage circuit 42 includes transistors Q22 and Q32, a first energy storage element Cf3, and a first magnetic element L2. The transistor Q22 is connected between the terminal i1 and a terminal k. The first energy storage element Cf3 is connected between the terminal k and a terminal n. The first magnetic element L2 is connected between the terminal n and the second terminal m. The transistor Q32 is connected between the terminal n and the ground terminal. The terminal k is a common terminal between the transistor Q22 and the first energy storage element Cf3. The terminal n is a common terminal between the first energy storage element Cf3 and the first magnetic element L2. A second terminal of the first switching power stage circuit 41 and a second terminal of the first switching power stage circuit 42 are connected to the terminal m.

The second energy storage element Ci3 is coupled to the first switching power stage circuit 42. Specifically, one terminal i2 of the second energy storage element Ci3 is coupled to the common terminal k between the transistor Q22 and the first energy storage element Cf3 via the transistor Q12 connected in series with the second energy storage element Ci3, and the other terminal of the second energy storage element Ci3 is connected to the ground terminal. The second switching power stage circuit 43 is coupled between the terminal i2 of the second energy storage element Ci3 and the second terminal m.

In an embodiment, each of the transistor Q31, the transistor Q32, and the transistor Q51 is a rectification switch, such as an MOSFET, a BJT, and an IGBT. In another embodiment, each of the transistor Q31, the transistor Q32 and the transistor Q51 is replaced with a diode.

Further, energy storage parameters of the first energy storage elements Cf2 and Cf3, and the second energy storage elements Ci2 and Ci3 are set to control the first switching power stage circuit 41 and the first switching power stage circuit 42 to meet inductor volt-second balance, i.e., to control the first magnetic element L1 and the first magnetic element L2 to be in a stable state. That is, the amount of change in each of currents of the first magnetic elements L1 and L2 during a switching period is controlled to be proximately zero.

In an embodiment, the power converter is configured to perform in-phase control on operation states of the first switching power stage circuits 41 and 42, and the second switching power stage circuit 43. The transistor Q21, the transistor Q22 and the transistor Q41 have a same duty cycle D and a same switching state. A switching state of the transistor Q31 is complementary to the switching state of the transistor Q21. The transistor Q31, the transistor Q32, the transistor Q11, the transistor Q12 and the transistor Q51 have a same switching state. In this case, the power converter in this embodiment is configured to adjust the duty cycle D, to adjust the output voltage Vout and keep stabilization of the output voltage Vout.

Based on the characteristic of the inductor volt-second balance of the first switching power stage circuits 41 and 42, and the second switching power stage circuit 43, the following relationships may be obtained.

$$(Vin-Vcf2)*D = Vout$$

$$(Vci2-Vcf3)*D = Vout$$

$$Vci3*D = Vout$$

where Vin represents an input voltage, Vcf2 represents a voltage across the first energy storage element Cf2, D represents a duty cycle (i.e., a ratio of a conduction time of the transistor Q21 to the switching period) of the transistor Q21, Vci2 represents a voltage across the second energy storage element Ci2, Vcf3 represents a voltage across the first energy storage element Cf3, Vci3 represents a voltage across the second energy storage element Ci3, and Vout represents an output voltage.

It can be seen from the connection relationship shown in Figure 4 that, in a case that switching control signals GL3 and GL3' are in a high level, the first energy storage element Cf2 is connected in parallel to the second energy storage element Ci2. In a case that switching control signals GL4 and GL4' are in a high level, the first energy storage element Cf3 is connected in parallel to the second energy storage element Ci3. Thus, the voltage across the first energy storage element Cf2 is equal to the voltage across the second energy storage element Ci2, and the voltage across the first energy storage element Cf3 is equal to the voltage across the second energy storage element Ci3, i.e., Vcf2 = Vci2 and Vcf3 = Vci3. Therefore, a relationship between the input voltage and the output voltage of the power converter in this embodiment may be expressed as the following formula:

$$\frac{Vout}{Vin} = \frac{D}{3}$$

In this embodiment, the power converter has a high gain and an adjustable stabilized output voltage. Further, the control manner is simple and is easy to be achieved.

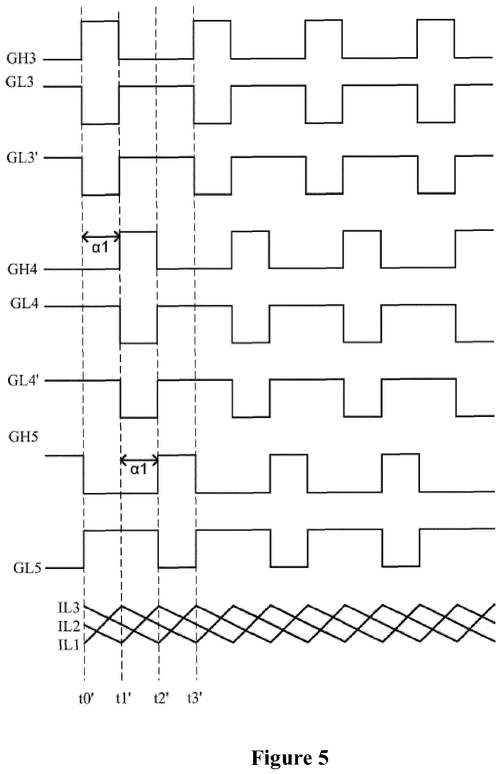

Figure 5 shows an operation waveform diagram of the power converter according to the second embodiment of the present disclosure. In this embodiment, the power converter is configured to perform phase-shift control on operation states of the first switching power stage circuits 41 and 42, and the second switching power stage circuit 43. Under the phase-shift control with reference to Figure 4, conduction timings of the transistor Q21, the transistor Q22 and the transistor Q41 have a same phase difference α1. In an embodiment, the phase difference α1 is 120°.

A switching state of the transistor Q21 is complementary to a switching state of the transistor Q31. A switching state of the transistor Q22 is complementary to a switching state of the transistor Q32. A switching state of the transistor Q41 is complementary to a switching state of the transistor Q51. Switching states of the transistor Q11 and the transistor Q12 is the same as the switching state of the transistor Q31. Also, the transistor Q21, the transistor Q22 and the transistor Q41 have a same duty cycle D. In this case, the power converter in this embodiment is configured to adjust the duty cycle D, to adjust the output voltage Vout and keep stabilization of the output voltage Vout. In this embodiment, the following description is given by taking the case that the duty cycle D is less than 0.5 as an example, i.e., D<0.5.

As shown in Figure 5, switching control signals GH3, GH4, GH5, GL3, GL4, GL5, GL3' and GL4' are respectively used to control the transistors Q21, Q22, Q41, Q31, Q32, Q51, Q11 and Q12.

In a time period from t0' to t1', the switching control signals GH3, GL4, GL4' and GL5 are at a high level. In this case, the transistors Q21, Q32, Q12 and Q51 are turned on, and the transistors Q31, Q11, Q22 and Q41 are turned off. A current IL1 of the first magnetic element L1 is increased, and a current IL2 of the first magnetic element L2 and a current IL3 of the second magnetic element L3 are decreased.

In a time period from t1' to t2', the switching control signals GL3, GL3', GH4 and GL5 are at a high level. In this case, the transistors Q31, Q11, Q22, and Q51 are turned on, and the transistors Q21, Q32, Q12 and Q41 are turned off. The current IL2 of the first magnetic element L2 is increased, and the current IL1 of the first magnetic element L1 and the current IL3 of the second magnetic element L3 are decreased.

In a time period from t2' to t3', the switching control signals GL3, GL3', GL4, GL4' and GH5 are at a high level. In this case, the transistors Q31, Q11, Q32, Q12 and Q41 are turned on, and the transistors Q21, Q22 and Q51 are turned off. The current IL1 of the first magnetic element L1 and the current IL2 of the first magnetic element L2 are decreased, and the current IL3 of the second magnetic element L3 is increased.

It can be seen from waveform diagrams of the current IL1 of the first magnetic element L1, the current IL2 of the first magnetic element L2 and the current IL3 of the second magnetic element L3 that, due to the interleaving connection and the phase-shift control, the ripple of the output voltage can be reduced, and the required output capacitance can be reduced.

Based on the characteristic of the inductor volt-second balance of the first switching power stage circuits 41 and 42, and the second switching power stage circuit 43, the following relationships may be obtained.

$$(Vin-Vcf2)*D=Vout$$

$$(Vci2-Vcf3)*D=Vout$$

$$Vci3*D=Vout$$

where Vin represents an input voltage, Vcf2 represents a voltage across the first energy storage element Cf2, D represents a duty cycle (i.e., a ratio of a conduction time of the transistor Q21 to the switching period) of the transistor Q21, Vci2 represents a voltage across the second energy storage element Ci2, Vcf3 represents a voltage across the first energy storage element Cf3, Vci3 represents a voltage across the second energy storage element Ci3, and Vout represents an output voltage.

It can be seen from the connection relationship shown in Figure 4 that, the voltage across the first energy storage element Cf2 is equal to the voltage across the second energy storage element Ci2, and the voltage across the first energy storage element Cf3 is equal to the voltage across the second energy storage element Ci3, i.e., Vcf2 = Vci2 and Vcf3 = Vci3. Therefore, a relationship between the input voltage and the output voltage of the power converter in this embodiment may be expressed as the following formula:

$$\frac{Vout}{Vin} = \frac{D}{3}$$

In this embodiment, due to the interleaving connection and the phase-shift control, the ripple of the output voltage can be reduced, and the required output capacitance of the output capacitor Co can be reduced. Further, the power converter in this embodiment has a high gain and an adjustable stabilized output voltage.

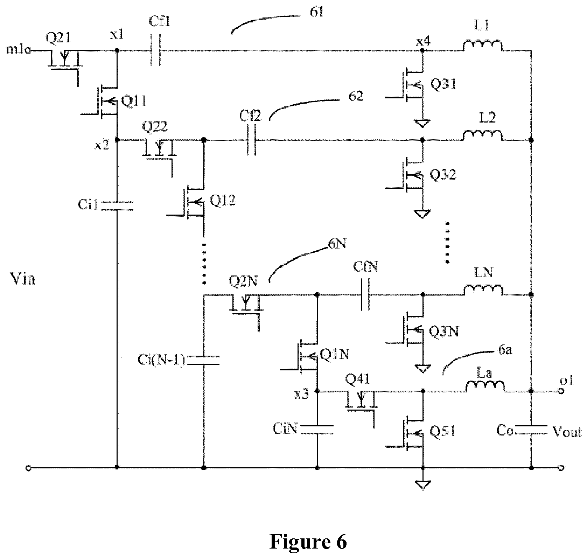

Figure 6 shows a schematic circuit diagram of a power converter according to a third embodiment of the present disclosure. As shown in Figure 6, the power converter in this embodiment includes N first switching power stage circuits 61 to 6N (N is an integer not less than 1), one second switching power stage circuit 6a, a first terminal m1, a second terminal o1, N second energy storage elements Ci1 to CiN, N transistors Q11 to Q1N, and an output capacitor Co. In this embodiment, the first terminal m1 is configured as an input terminal of the power converter to receive an input voltage Vin. The second terminal o1 is configured as an output terminal of the power converter to generate an output voltage Vout.

As shown in Figure 6, a j-th second energy storage element Cij is coupled to a j-th first switching power stage circuit 6j, where j=1, 2,..., N. Specifically, one terminal of the j-th second energy storage element Cij is coupled to the j-th first switching power stage circuit 6j via a transistor Q1j connected in series with the j-th second energy storage element Cij, and the other terminal of the j-th second energy storage element Cij is connected to a ground terminal. For example, a terminal x2 of the second energy storage element Ci1 is coupled to a terminal x1 via the transistor Q11 connected in series with the second energy storage element Ci1.

A first terminal of the first switching power stage circuit 61 is coupled to the terminal m1, and a second terminal of the first switching power stage circuit 61 is coupled to the terminal o1. In the case of N>1, an n-th first switching power stage circuit 6n is coupled between an (n-1)-th second energy storage element Ci(n-1) and the second terminal o1, where n=2, 3,..., N. A second terminal of each of the first switching power stage circuits is connected to the second terminal o1.

The j-th first switching power stage circuit 6j includes a transistor Q2j, a first energy storage element Cfj, a transistor Q3j, and a first magnetic element Lj. In the case of j=1, one terminal of a transistor Q21 is coupled to the terminal m1, and the other terminal of the transistor Q21 is connected to a first energy storage element Cf1. A first magnetic element L1 is connected between the first energy storage element Cf1 and the terminal o1. A transistor Q31 is connected between the ground terminal and a terminal x4 which is a common terminal between the first energy storage element Cf1 and the first magnetic element L1. In the case of j>1, one terminal of the transistor Q2j is connected to a common terminal between a transistor Q1(j-1) and a second energy storage element Ci(j-1), and the other terminal of the transistor Q2j is connected to the first energy storage element Cfj. The first magnetic element Lj is connected between the first energy storage element Cfj and the terminal o1. The transistor Q3j is connected between a terminal which is a common terminal between the first energy storage element Cfj and the first magnetic element Lj, and the ground terminal.

The second switching power stage circuit 6a is couple between to a terminal x3 of the second energy storage element CiN and the terminal o1. The second switching power stage circuit 6a includes a transistor Q41, a transistor Q51, and a second magnetic element La. Connection manners of the second switching power stage circuit 6a and elements included in the second switching power stage circuit 6a are similar to connection manners of the second switching power stage circuit 12 and elements included in the second switching power stage circuit 12 described in the first embodiment, which are not repeated herein.

In an embodiment, each of the transistor Q3j and the transistor Q51 is a rectification switch, such as an MOSFET, a BJT, and an IGBT. In another embodiment, each of the transistor Q3j and the transistor Q51 is replaced with a diode.

Energy storage parameters of the first energy storage element Cfj and the second energy storage element Cij are set to control the first switching power stage circuit 6j to meet inductor volt-second balance, i.e., to control the first magnetic element Lj to be in a stable state. That is, the amount of change in a current of the first magnetic element Lj during a switching period is controlled to be approximately zero.

In this embodiment, the second energy storage elements Ci1 to CiN, as power supplies, resepctively supply input voltages to the corresponding first switching power stage circuits 62 to 6N and the second switching power stage circuit 6a. The first energy storage element Cfj charges the second energy storage element Cij in a case that the first energy storage element Cfj meets a predetermined condition (for example, the transistor Q1j is turned on),. In this embodiment, the BUCK topology is used in the first switching power stage circuits 6j and the second switching power stage circuit 6a, so as to achieve a high buck ratio.

It should be understood that, the first switching power stage circuits 6j and the second switching power stage circuit 6a may be implemented by using any one of a Boost topology, a Buck topology, a Boost-Buck topology, a Zeta topology, a Sepic topology, a Cuk topology, a flyback converter, a forward converter, a push-pull converter, a half-bridge converter, a full-bridge converter and an LLC converter, according to different application needs.

In an embodiment, the power converter is configured to perform in-phase control on operation states of the first switching power stage circuit 6j and the second switching power stage circuit 6a. Under the in-phase control, the transistors Q21 to Q2N are controlled to have a same switching state as the transistor Q41, and the transistors Q31 to Q3N are controlled to have a same switching state as the transistors Q11 to Q1N, and the transistor Q51, where a switching state of the transistor Q2j is complementary to a switching state of the transistor Q3j. The transistors Q21 to Q2N and the transistor Q41 have a same duty cycle. In this case, the power converter in this embodiment is configured to adjust the duty cycle of the transistor Q21, to adjust the output voltage Vout and keep stabilization of the output voltage Vout.

Based on the characteristic of the inductor volt-second balance of the first switching power stage circuits 61 to 6N and the second switching power stage circuit 6a, the following relationships may be obtained.

$$(Vin-Vcf1)*D=Vout$$

$$(Vci1-Vcf2)*D=Vout$$

$$(Vci(N-1)-VcfN)*D=Vout$$

$$VciN*D=Vout$$

where Vin represents an input voltage, Vcf1 represents a voltage across the first energy storage element Cf1, D represents a duty cycle (i.e., a ratio of a conduction time of the transistor Q21 to the switching period) of the transistor Q21, Vci1 represents a voltage across the second energy storage element Ci1, Vcf2 represents a voltage across the first energy storage element Cf2, Vci(N-1) represents a voltage across the second energy storage element Ci(N-1), VciN represents a voltage across the second energy storage element CiN, and Vout represents an output voltage.

It can be seen from the connection relationship shown in Figure 6 that, a voltage across the first energy storage element Cfj is equal to a voltage across the second energy storage element Cij, i.e., Vcfj = Vcij. Therefore, a relationship between the input voltage and the output voltage of the power converter in this embodiment may be expressed as the following formula:

$$\frac{Vout}{Vin}=\frac{D}{N}$$

In this embodiment, the power converter has a high gain and an adjustable stabilized output voltage. Further, the control manner is simple and is easy to be achieved.

In another embodiment, the power converter is configured to perform phase-shift control on operation states of the first switching power stage circuit 6j and the second switching power stage circuit 6a. Under the phase-shift control, the transistors Q21 to Q2N and the transistor Q41 are controlled to have a same phase difference between conduction timings of the transistors Q21 to Q2N and the transistor Q41. In an embodiment, the phase difference is 360°/ (N+1).

A switching state of the transistor Q2j is complementary to a switching state of the transistor Q3j. A switching state of the transistor Q1j is the same as the switching state of the transistor Q3j. A switching state of the transistor Q41 is complementary to a switching state of the transistor Q51. The transistors Q21 to Q2N and the transistor Q41 have a same duty cycle. In this case, the power converter in this embodiment is configured to adjust the duty cycle of the transistor Q21, to adjust the output voltage Vout and keep stabilization of the output voltage Vout.

It can be seen from current waveforms of the first magnetic elements and the second magnetic elements in the first embodiment and the second embodiment that, the ripple of the current is reduced as the number of the first switching power stage circuits is increased. Similarly, in this embodiment, due to the interleaving connection and the phase-shift control, the ripple of the output voltage can be reduced, and the required output capacitance can be reduced. An increased number of the first switching power stage circuits corresponds to the low ripple of the output voltage, thereby requiring a small output capacitance.

Based on the characteristic of the inductor volt-second balance of the first switching power stage circuits 61 to 6N, and the second switching power stage circuit 6a, the following relationships may be obtained.

$$(Vin-Vcf1)*D=Vout$$

$$(Vci1-Vcf2)*D=Vout$$

$$(Vci(N-1)-VcfN)*D=Vout$$

$$VciN*D=Vout$$

where Vin represents an input voltage, Vcf1 represents a voltage across the first energy storage element Cf1, D represents a duty cycle (i.e., a ratio of a conduction time of the transistor Q21 to the switching period) of the transistor Q21, Vci1 represents a voltage across the second energy storage element Ci1, Vcf2 represents a voltage across the first energy storage element Cf2, Vci(N-1) represents a voltage across the second energy storage element Ci(N-1), VciN represents a voltage across the second energy storage element CiN, and Vout represents an output voltage.

It can be seen from the connection relationship shown in Figure 6 that, a voltage across the first energy storage element Cfj is equal to a voltage across the second energy storage element Cij, i.e., Vcfj =Vcij. Therefore, a relationship between the input voltage and the output voltage of the power converter in this embodiment may be expressed as the following formula:

$$\frac{Vout}{Vin} = \frac{D}{N}$$

In this embodiment, due to the interleaving connection and the phase-shift control, the ripple of the output voltage can be reduced, and the required output capacitance of the output capacitor Co can be reduced. Further, the power converter in this embodiment has a high gain and an adjustable stabilized output voltage. An increased number of the first switching power stage circuits corresponds to the low ripple of the output voltage and a high gain, thereby requiring a small output capacitance.

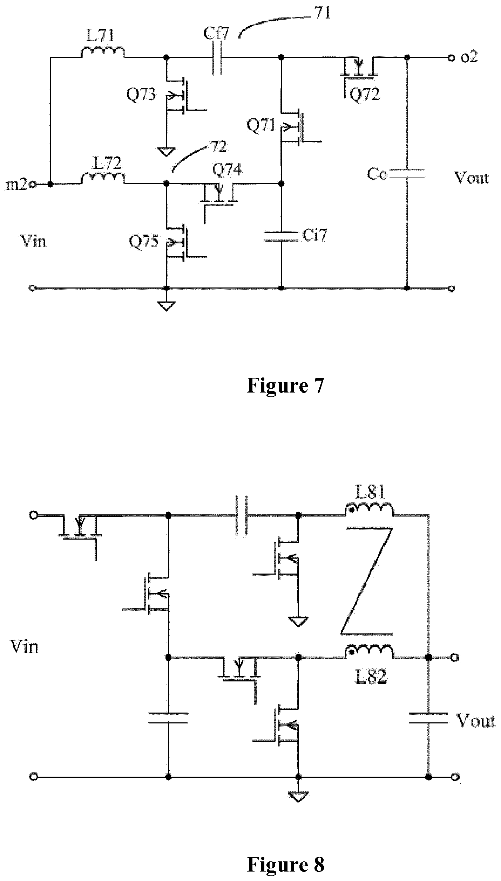

Figure 7 shows a schematic circuit diagram of a power converter according to a fourth embodiment of the present disclosure. As shown in Figure 7, the power converter in this embodiment is a Boost power stage converter. The power converter includes an first switching power stage circuit 71, a second switching power stage circuit 72, a first terminal o2, a second terminal m2, a transistor Q71, a second energy storage element Ci7, and an output capacitor Co. The first terminal o2 is configured as an output terminal of the power converter to generate an output voltage Vout, and the second terminal m2 is configured as an input terminal of the power converter to receive an input voltage Vin. The first switching power stage circuit 71 includes a transistor Q72, a first energy storage element Cf7, a transistor Q73 and a first magnetic element L71. The second switching power stage circuit 72 includes a transistor Q74, a transistor Q75 and a second magnetic element L72. In an embodiment, each of the transistor Q73 and the transistor Q75 is a rectification switch, such as an MOSFET, a BJT, and an IGBT. In another embodiment, each of the transistor Q73 and the transistor Q75 is replaced with a diode. A Specific connection manner of the power converter in this embodiment is similar to that in the first embodiment, which is not repeated herein.

Energy storage parameters of the first energy storage element Cf7 and the second energy storage element Ci7 are set to control the first switching power stage circuit 71 to meet inductor volt-second balance, i.e., to control the first magnetic element L71 to be in a stable state. That is, the amount of change in a current of the first magnetic element L71 during a switching period is controlled to be approximately zero.

In an embodiment, the power converter is configured to perform in-phase control on operation states of the first switching power stage circuit 71 and the second switching power stage circuit 72. Under the in-phase control, the transistor Q72 is controlled to have a same switching state as the transistor Q74, and the transistor Q71 is controlled to have a same switching state as the transistor Q73, where the switching state of the transistor Q72 is complementary to the switching state of the transistor Q73. The transistor Q72 and the transistor Q74 have a same duty cycle D. In this case, the power converter in this embodiment is configured to adjust the duty cycle D, to adjust the output voltage Vout and keep stabilization of the output voltage Vout.

Based on the characteristic of the inductor volt-second balance of the first switching power stage circuit and the second switching power stage circuit, the following relationships may be obtained.

$$Vin = (1-D) * (Vout - Vcf7)$$

$$Vin = (1-D) * Vci7$$

where Vin represents an input voltage, Vcf7 represents a voltage across the first energy storage element Cf7, D represents a duty cycle (i.e., a ratio of a conduction time length of the transistor Q72 to the switching period) of the transistor Q72, Vci7 represents a voltage across the second energy storage element Ci7, and Vout represents an output voltage.

It can be seen from the connection relationship shown in Figure 7 that, the voltage across the first energy storage element Cf7 is equal to the voltage across the second energy storage element Ci7, i.e., Vcf7=Vci7. Therefore, a relationship between the input voltage and the output voltage of the power converter in this embodiment may be expressed as the following formula:

$$\frac{Vout}{Vin} = \frac{2}{1-D}$$

In this embodiment, due to the interleaving connection and the in-phase control, the power converter has a high gain and an adjustable stabilized output voltage. Further, the control manner is simple and is easy to be achieved.

In another embodiment, the power converter is configured to perform phase-shift control on operation states of the first switching power stage circuit 71 and the second switching power stage circuit 72. Under the phase-shift control, the transistor Q72 and the transistor Q74 are controlled to have a phase difference α between conduction timings of the transistor Q72 and the transistor Q74. In an embodiment, the phase difference α is 180°. A switching state of the transistor Q72 is complementary to a switching state of the transistor Q73. A switching state of the transistor Q71 is the same as the switching state of the transistor Q73. A switching state of the transistor Q74 is complementary to a switching state of the transistor Q75. The transistor Q72 and the transistor Q74 have a same duty cycle D. In this case, the power converter in this embodiment is configured to adjust the duty cycle D, to adjust the output voltage Vout and keep stabilization of the output voltage Vout.

In this embodiment, due to the interleaving connection and the phase-shift control, the ripple of the output voltage can be reduced, and the required output capacitance of the output capacitor Co can be reduced. Further, the power converter in this embodiment has a high gain and an adjustable stabilized output voltage.

It should be understood that the power converter in this embodiment may include N first switching power stage circuits, one second switching power stage circuit, and N second energy storage elements. Based on the characteristic of the inductor volt-second balance of the first switching power stage circuit and the second switching power stage circuit and the above description, a relationship between the input voltage and the output voltage of the power converter may be obtained.

$$\frac{\text{Vout}}{\text{Vin}} = \frac{N}{1 - D}$$

In this embodiment, due to the interleaving connection and the phase-shift control, the ripple of the output voltage can be reduced, and the required output capacitance of the output capacitor Co can be reduced. Further, the power converter in this embodiment has a high gain and an adjustable stabilized output voltage. An increased number of the first switching power stage circuits corresponds to the low ripple of the output voltage and a high gain, thereby requiring a small output capacitance.

Figure 8 shows a schematic circuit diagram of a power converter according to a fifth embodiment of the present disclosure. As shown in Figure 8, the power converter in this embodiment includes one first switching power stage circuit and one second switching power stage circuit. A connection manner of the power converter in this embodiment is similar to that in the first embodiment, which is not repeated herein. In this embodiment, a first magnetic element L81 and a second magnetic element L82 are coupled with each other. Compared with the first embodiment, the ripple of the output voltage can be further reduced and the required output capacitance of the output capacitor Co can be further reduced with the power converter in this embodiment.

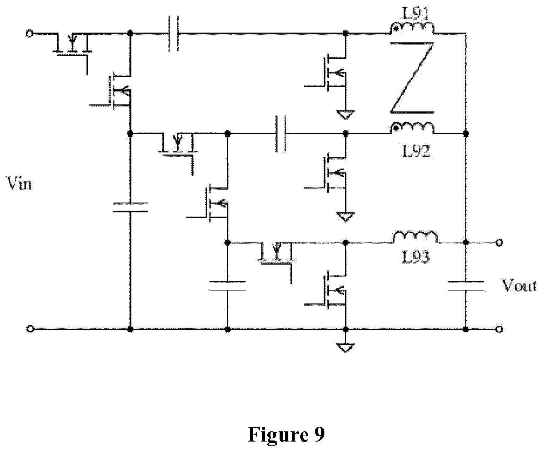

Figure 9 shows a schematic circuit diagram of a power converter according to a sixth embodiment of the present disclosure. As shown in Figure 9, the power converter in this embodiment includes two first switching power stage circuits and one second switching power stage circuit. A connection manner of the power converter in this embodiment is similar to that in the second embodiment, which is not repeated herein. In this embodiment, a first magnetic element L91 and a first magnetic element L92 are coupled with each other. Compared with the second embodiment, the ripple of the output voltage can be further reduced and the required output capacitance of the output capacitor Co can be further reduced with the power converter in this embodiment. It should be understood that the ripple of the output voltage can also be reduced by coupling the first magnetic element L92 (or L91) with the second magnetic element.

It is easy to understand that, in the case that the power converter includes N first switching power stage circuits and one second switching power stage circuit, at least one of the first magnetic elements is coupled with the second magnetic element, or at least two of the first magnetic elements are coupled with each other. In this way, the ripple of the output voltage can be further reduced and the required output capacitance can be further reduced.

**Claims**

1. A power converter, comprising:

a first terminal (a, z, m1, o2);
a second terminal (c, m, o1, m2); N first transistors (Q11, Q12, ..., Q1N);
N first switching power stage circuits (11, 41, 42, 61, 62, 6j, ..., 6N, 71), each comprising a second transistor (Q21, Q22, ..., Q2N) and
a first energy storage element (Cfl, Cf2, Cf3, Cfj, Cf7), wherein N is greater than or equal to 1; N second energy storage elements (Cil, Ci2, Ci3, Ci7, ..., CiN), wherein
the $n^{th}$, $1 \leq n \leq N$, second energy storage element (Ci1, Ci2, Ci3, Ci7, ..., CiN) is coupled between the $n^{th}$ first switching power stage circuits (11, 41, 42, 61, 62, 6j, ..., 6N, 71) and a ground;
a first terminal of each of the N first switching power stage circuits (11, 41, 42, 61, 62, 6j, ..., 6N, 71) is coupled to the first terminal (a, z, m1, o2) of the power converter, and a second terminal of each of the N first switching power stage circuits (11, 41, 42, 61, 62, 6j, ..., 6N, 71) is connected to the second terminal (c, m, o1, m2) of the power converter;
the $n^{th}$ first transistor (Q11, Q12, ..., Q1N) is connected between the $n^{th}$ second energy storage element and the first energy storage element of the $n^{th}$ first switching power stage circuit;
the $n^{th}$ second transistor (Q21, Q22, ..., Q2N) is connected between the first terminal of the $n^{th}$ first switching power stage circuit and the first energy storage element of the $n^{th}$ first switching power stage circuit, **characterized in that** the power converter further comprises one second switching power stage circuit (12, 43, 6a, 72) coupled between a terminal of the Nth second energy storage element (CiN) and the second terminal (c, m, o1, m2) of the power converter, the Nth second energy storage element (CiN) is capable of serving as a power supply to supply power to the second terminal (c, m, o1, m2) of the power converter via the second switching power stage circuit,

wherein each first switching power stage circuit (11, 41, 42, 61, 62, 6j, ..., 6N, 71) comprises a first magnetic element (Lo1, L1, L2, Lj, ..., LN, L71), and in each first switching power stage circuit, a terminal of the respective first energy storage element (Cfl, Cf2, Cf3, Cfj, Cf7) of the first switching power stage circuit is connectable to ground via a third transistor, and is connected to the second terminal (c, m, o1, m2) of the power converter via the respective first magnetic element of the first switching power stage circuit.

2. The power converter according to claim 1, wherein energy storage parameters of first energy storage elements (Cfl, Cf2, Cf3, Cfj, Cf7) of the N first switching power stage circuits (11, 41, 42, 61, 62, 6j, ..., 6N, 71) and the N second energy storage elements (Cil, Ci2, Ci3, Ci7, ..., CiN) are set to control the N first switching power stage circuits (11, 41, 42, 61, 62, 6j, ..., 6N, 71) to meet inductor volt-second balance.

3. The power converter according to claim 1, wherein in a case that N is greater than 1, an n-th first switching power stage circuit among the N first switching power stage circuits (11, 41, 42, 61, 62, 6j, ..., 6N, 71) is coupled between a terminal of an (n-1)-th second energy storage element (Cil, Ci2, Ci3, Ci7, ..., CiN) among the N second energy storage elements (Cil, Ci2, Ci3, Ci7, ..., CiN) and the second terminal (c, m, o1, m2) of the power converter, and a j-th second energy storage element (Cil, Ci2, Ci3, Ci7, ..., CiN) among the N second energy storage elements (Cil, Ci2, Ci3, Ci7, ..., CiN) is coupled between a j-th first switching power stage circuit among the N first switching power stage circuits (11, 41, 42, 61, 62, 6j, ..., 6N, 71), and the ground, wherein n=2, 3,..., N, and j=1, 2, ..., N.

4. The power converter according to claim 1, wherein the third transistor is replaced with a diode.

5. The power converter according to claim 1, wherein the second switching power stage circuit (12, 43, 6a, 72) comprises:

a fourth transistor and a fifth transistor that are connected between the second energy storage element (Cil, Ci2, Ci3, Ci7, ..., CiN) corresponding to the second switching power stage circuit (12, 43, 6a, 72) and the ground; and
a second magnetic element connected between the second terminal (c, m, o1, m2) of the power converter and a terminal being a common terminal between the fourth transistor and the fifth transistor.

6. The power converter according to claim 1, wherein

the first terminal (a, z, m1, o2) of the power converter is configured as an input terminal of the power converter to receive an input voltage, and the second terminal (c, m, o1, m2) of the power converter is configured as an output terminal of the power converter to generate an output voltage; or
the second terminal (c, m, o1, m2) of the power converter is configured as an input terminal of the power converter to receive an input voltage, and the first terminal (a, z, m1, o2) of the power converter is configured as an output terminal of the power converter to generate an output voltage.

7. The power converter according to claim 5, wherein the power converter is configured to perform phase-shift control on operation states of the N first switching power stage circuits (11, 41, 42, 61, 62, 6j, ..., 6N, 71) and the second switching power stage circuit (12, 43, 6a, 72).

8. The power converter according to claim 7, wherein

the second transistor of each of the N first switching power stage circuits (11, 41, 42, 61, 62, 6j, ..., 6N, 71) has a same duty cycle as the fourth transistor;
a switching state of the second transistor is complementary to a switching state of the third transistor;
a switching state of the fourth transistor is complementary to a switching state of the fifth transistor;
a switching state of a j-th first transistor among the N first transistors is complementary to a switching state of a third transistor of a j-th first switching power stage circuit among the N first switching power stage circuits (11, 41, 42, 61, 62, 6j, ..., 6N, 71), wherein j=1, 2, 3, ..., N; and
the power converter is configured to adjust the duty cycle of the second transistor to generate a stabilized output voltage.

9. The power converter according to claim 8, wherein in a case that N is greater than 1, there is a same phase difference between conduction timings of adjacent second transistors among the N second transistors, and there is the same phase difference between a conduction timing of an N-th second transistor among the N second transistors and a conduction timing of the fourth transistor.

10. The power converter according to claim 9, wherein the phase difference is 360°/ (N+1).

11. The power converter according to claim 5, wherein the power converter is configured to perform in-phase control on operation states of the N first switching power stage circuits (11, 41, 42, 61, 62, 6j, ..., 6N, 71) and the second switching power stage circuit (12, 43, 6a, 72).

12. The power converter according to claim 11, wherein

the second transistor of each of the N first switching power stage circuits (11, 41, 42, 61, 62, 6j, ..., 6N, 71) has a same switching state as the fourth transistor;
the third transistor of each of the N first switching power stage circuits (11, 41, 42, 61, 62, 6j, ..., 6N, 71) has a same switching state as the N first transistors and the fifth transistor, and the switching state of the third transistor is complementary to a switching state of the second transistor; and
the power converter is configured to adjusting a duty cycle of the second transistor to generate a stabilized output voltage.

13. The power converter according to claim 5, wherein at least one of first magnetic elements of the N first switching power stage circuits (11, 41, 42, 61, 62, 6j, ..., 6N, 71) is coupled with the second magnetic element; and/or at least two of first magnetic elements of the N first switching power stage circuits (11, 41, 42, 61, 62, 6j, ..., 6N, 71) are coupled with each other.

**Patentansprüche**

1. Leistungswandler, umfassend:

einen ersten Anschluss (a, z, m1, o2);
einen zweiten Anschluss (c, m, o1, m2);
N erste Transistoren (Q11, Q12, ..., Q1N);
N erste Schaltleistungsstufenschaltungen (11, 41, 42, 61, 62, 6j, ..., 6N, 71), die jeweils einen zweiten Transistor (Q21, Q22, ..., Q2N) und ein erstes Energiespeicherelement (Cf1, Cf2, Cf3, Cfj, Cf7) umfassen, wobei N größer oder gleich 1 ist;
N zweite Energiespeicherelemente (Ci1, Ci2, Ci3, Ci7, ..., CiN), wobei das $n^{te}$, $1 \leq n \leq N$, zweite Energiespeicherelement (Ci1, Ci2, Ci3, Ci7, ..., CiN) zwischen den $n^{ten}$ ersten Schaltleistungsstufenschaltungen (11, 41, 42, 61, 62, 6j, ..., 6N, 71) und einer Masse gekoppelt ist;
wobei ein erster Anschluss jeder der N ersten Schaltleistungsstufenschaltungen (11, 41, 42, 61, 62, 6j, ..., 6N, 71) mit dem ersten Anschluss (a, z, m1, o2) des Leistungswandlers gekoppelt ist, und wobei ein zweiter Anschluss jeder der N ersten Schaltleistungsstufenschaltungen (11, 41, 42, 61, 62, 6j, ..., 6N, 71) mit dem zweiten Anschluss (c, m, o1, m2) des Leistungswandlers verbunden ist;
wobei der $n^{te}$ erste Transistor (Q11, Q12, ..., Q1N) zwischen dem $n^{ten}$ zweiten Energiespeicherelement und dem ersten Energiespeicherelement der $n^{ten}$ ersten Schaltleistungsstufenschaltung verbunden ist;
wobei der $n^{te}$ zweite Transistor (Q21, Q22, ..., Q2N) zwischen dem ersten Anschluss der $n^{ten}$ ersten Schaltleistungsstufenschaltung und dem ersten Energiespeicherelement der $n^{ten}$ Schaltleistungsstufenschaltung verbunden ist, **dadurch gekennzeichnet, dass** der Leistungswandler ferner eine zweite Schaltleistungsstufenschaltung (12, 43, 6a, 72) umfasst, die zwischen einem Anschluss des $N^{ten}$ zweiten Energiespeicherelements (CiN) und dem zweiten Anschluss (c, m, o1, m2) des Leistungswandlers verbunden ist,
wobei das N-te zweite Energiespeicherelement (CiN) befähigt ist, als eine Leistungsversorgung zu dienen, um dem zweiten Anschluss (c, m, o1, m2) des Leistungswandlers über die zweite Schaltleistungsstufenschaltung Leistung bereitzustellen,
wobei jede erste Schaltleistungsstufenschaltung (11, 41, 42, 61, 62, 6j, ..., 6N, 71) ein erstes magnetisches Element (Lo1, L1, L2, Lj, ..., LN, L71) umfasst, und wobei in jeder ersten Schaltleistungsstufenschaltung ein Anschluss des entsprechenden ersten Energiespeicherelements (Cf1, Cf2, Cf3, Cfj, Cf7) der ersten Schaltleistungsstufenschaltung über einen dritten Transistor mit Masse verbindbar ist und mit dem zweiten Anschluss (c, m, o1, m2) des Leistungswandlers über das entsprechende erste magnetische Element der ersten Schaltleistungsstufenschaltung verbunden ist.

2. Leistungswandler nach Anspruch 1, wobei Energiespeicherparameter von ersten Energiespeicherelementen (Cf1, Cf2, Cf3, Cfj, Cf7) der N ersten Schaltleistungsstufenschaltungen (11, 41, 42, 61, 62, 6j, ..., 6N, 71) und der N zweiten Energiespeicherelemente (Ci1, Ci2, Ci3, Ci7, ..., CiN) eingestellt sind, um die N ersten Schaltleistungsstufenschaltungen (11, 41, 42, 61, 62, 6j, ..., 6N, 71) zum Erfüllen einer Induktor-Volt-Sekunden-Balance zu steuern.

3. Leistungswandler nach Anspruch 1, wobei in einem Fall, dass N größer als 1 ist, eine n-te erste Schaltleistungsstufenschaltung unter den N ersten Schaltleistungsstufenschaltungen (11, 41, 42, 61, 62, 6j, ..., 6N, 71) zwischen einen Anschluss eines (n-1)-ten zweiten Energiespeicherelements (Ci1, Ci2, Ci3, Ci7, ..., CiN) unter den N zweiten Energiespeicherelementen (Ci1, Ci2, Ci3, Ci7, ..., CiN) und dem zweiten Anschluss (c, m, o1, m2) des Leistungswandlers gekoppelt ist, und ein j-tes zweites Energiespeicherelement (Ci1, Ci2, Ci3, Ci7, ..., CiN) unter den N zweiten Energiespeicherelementen (Ci1, Ci2, Ci3, Ci7, ..., CiN) zwischen einer j-ten ersten Schaltleistungsstufenschaltung (11, 41, 42, 61, 62, 6j, ..., 6N, 71) unter den N ersten Schaltleistungsstufenschaltungen (11, 41, 42, 61, 62, 6j, ..., 6N, 71) und der Masse gekoppelt ist, wobei n = 2, 3, ..., N und j = 1, 2, ..., N.

4. Leistungswandler nach Anspruch 1, wobei der dritte Transistor durch eine Diode ersetzt ist.

5. Leistungswandler nach Anspruch 1, wobei die zweite Schaltleistungsstufenschaltung (12, 43, 6a, 72) umfasst:

   einen vierten Transistor und einen fünften Transistor, die zwischen dem zweiten Energiespeicherelement (Ci1, Ci2, Ci3, Ci7, ..., CiN), das der zweiten Schaltleistungsstufenschaltung (12, 43, 6a, 72) entspricht, und der Masse verbunden sind; und
   ein zweites magnetisches Element, das zwischen dem zweiten Anschluss (c, m, o1, m2) des Leistungswandlers und einem Anschluss angeschlossen ist, der ein gemeinsamer Anschluss zwischen dem vierten Transistor und dem fünften Transistor ist.

6. Leistungswandler nach Anspruch 1, wobei

   der erste Anschluss (a, z, m1, o2) des Leistungswandlers als ein Eingangsanschluss des Leistungswandlers ausgebildet ist, um eine Eingangsspannung zu empfangen, und wobei der zweite Anschluss (c, m, o1, m2) des Leistungswandlers als ein Ausgangsanschluss des Leistungswandlers ausgebildet ist, um eine Ausgangsspannung zu erzeugen; oder
   wobei der zweite Anschluss (c, m, o1, m2) des Leistungswandlers als ein Eingangsanschluss des Leistungswandlers ausgebildet ist, um eine Eingangsspannung zu empfangen, und wobei der erste Anschluss (a, z, m1, o2) des Leistungswandlers als ein Ausgangsanschluss des Leistungswandlers ausgebildet ist, um eine Ausgangsspannung zu erzeugen.

7. Leistungswandler nach Anspruch 5, wobei der Leistungswandler ausgebildet ist, eine Phasenverschiebungssteuerung von Betriebszuständen der N ersten Schaltleistungsstufenschaltungen (11, 41, 42, 61, 62, 6j, ..., 6N, 71) und der zweiten Schaltleistungsstufenschaltung (12, 43, 6a, 72) durchzuführen.

8. Leistungswandler nach Anspruch 7, wobei

   der zweite Transistor jeder der N ersten Schaltleistungsstufenschaltungen (11, 41, 42, 61, 62, 6j, ..., 6N, 71) ein gleiches Tastverhältnis wie der vierte Transistor aufweist;
   wobei ein Schaltzustand des zweiten Transistors komplementär zu einem Schaltzustand des dritten Transistors ist;
   wobei ein Schaltzustand des vierten Transistors komplementär zu einem Schaltzustand des fünften Transistors ist;
   wobei ein Schaltzustand eines j-ten ersten Transistors unter den N ersten Transistoren komplementär zu einem Schaltzustand eines dritten Transistors einer j-ten ersten Schaltleistungsstufenschaltung unter den N ersten Schaltleistungsstufenschaltungen (11, 41, 42, 61, 62, 6j, ..., 6N, 71) ist, wobei j =1, 2, 3, ..., N; und
   wobei der Leistungswandler ausgebildet ist, das Tastverhältnis des zweiten Transistors anzupassen, um eine stabilisierte Ausgangsspannung zu erzeugen.

9. Leistungswandler nach Anspruch 8, wobei in einem Fall, dass N größer als 1 ist, eine gleiche Phasendifferenz zwischen Leitungszeiten benachbarter zweiter Transistoren unter den N zweiten Transistoren besteht, und dieselbe Phasendifferenz zwischen einer Leitungszeit eines N-ten zweiten Transistor unter den N zweiten Transistoren und einer Leitungszeit des vierten Transistors besteht.

10. Leistungswandler nach Anspruch 9, wobei die Phasendifferenz 360° / (N+1) ist.

11. Leistungswandler nach Anspruch 5, wobei der Leistungswandler ausgebildet ist, eine gleichphasige Steuerung von Betriebszuständen der N ersten Schaltleistungsstufenschaltungen (11, 41, 42, 61, 62, 6j, ..., 6N, 71) und der zweiten Schaltleistungsstufenschaltung (12, 43, 6a, 72) durchzuführen.

12. Leistungswandler nach Anspruch 11, wobei der zweite Transistor jeder der N ersten Schaltleistungsstufenschaltungen (11, 41, 42, 61, 62, 6j, ..., 6N, 71) einen selben Schaltzustand wie der vierte Transistor aufweist;

   wobei der dritte Transistor jeder der N ersten Schaltleistungsstufenschaltungen (11, 41, 42, 61, 62, 6j, ..., 6N, 71) einen selben Schaltzustand wie die N ersten Transistoren und der fünfte Transistor aufweist, und wobei der Schaltzustand des dritten Transistors komplementär zu einem Schaltzustand des zweiten Transistors ist; und

wobei der Leistungswandler ausgebildet ist, ein Tastverhältnis des zweiten Transistors anzupassen, um eine stabilisierte Ausgangsspannung zu erzeugen.

13. Leistungswandler nach Anspruch 5, wobei mindestens eines der ersten magnetischen Elemente der N ersten Schaltleistungsstufenschaltungen (11, 41, 42, 61, 62, 6j, ..., 6N, 71) mit dem zweiten magnetischen Element gekoppelt; und/oder

wobei mindestens zwei der ersten magnetischen Elemente der N ersten Schaltleistungsstufenschaltungen (11, 41, 42, 61, 62, 6j, ..., 6N, 71) miteinander gekoppelt sind.

## Revendications

1. Convertisseur de puissance, comprenant :

une première borne (a, z, m1, o2) ;
une deuxième borne (c, m, o1, m2) ;
N premiers transistors (Q11, Q12, Q1N) ;
N premiers circuits d'étage de puissance de commutation (11, 41, 42, 61, 62, 6j, ..., 6N, 71), comprenant chacun un deuxième transistor (Q21, Q22, Q2N) et
un premier élément de stockage d'énergie (Cfl, Cf2, Cf3, Cfj, Cf7), dans lequel N est supérieur ou égal à 1 ;
N deuxièmes éléments de stockage d'énergie (Cil, Ci2, Ci3, Ci7, ..., CiN), dans lequel
le $n^{ième}$ deuxième élément de stockage d'énergie (Cil, Ci2, Ci3, Ci7, ..., CiN), où $1 \leq n \leq N$, est couplé entre les $n^{ième}$s premiers circuits d'étage de puissance de commutation (11, 41, 42, 61, 62, 6j, ..., 6N, 71) et une masse ;
une première borne de chacun des N premiers circuits d'étage de puissance de commutation (11, 41, 42, 61, 62, 6j, ..., 6N, 71) est couplée à la première borne (a, z, m1, o2) du convertisseur de puissance, et une deuxième borne de chacun des N premiers circuits d'étage de puissance de commutation (11, 41, 42, 61, 62, 6j, ..., 6N, 71) est connectée à la deuxième borne (c, m, o1, m2) du convertisseur de puissance ;
le $n^{ième}$ premier transistor (Q11, Q12, Q1N) est connecté entre le $n^{ième}$ deuxième élément de stockage d'énergie et le premier élément de stockage d'énergie du $n^{ième}$ premier circuit d'étage de puissance de commutation ;

le $n^{ième}$ deuxième transistor (Q21, Q22, Q2N) est connecté entre la première borne du $n^{ième}$ premier circuit d'étage de puissance de commutation et le premier élément de stockage d'énergie du $n^{ième}$ premier circuit d'étage de puissance de commutation, **caractérisé en ce que** le convertisseur de puissance comprend un deuxième circuit d'étage de puissance de commutation (12, 43, 6a, 72) couplé entre une borne du $N^{ième}$ deuxième élément de stockage d'énergie (CiN) et la deuxième borne (c, m, o1, m2) du convertisseur de puissance,
le $N^{ième}$ deuxième élément de stockage d'énergie (CiN) est en mesure de servir d'alimentation en puissance pour fournir de la puissance à la deuxième borne (c, m, o1, m2) du convertisseur de puissance via le deuxième circuit d'étage de puissance de commutation,
dans lequel chaque premier circuit d'étage de puissance de commutation (11, 41, 42, 61, 62, 6j, ..., 6N, 71) comprend un premier élément magnétique (Lo1, L1, L2, Lj, ..., LN, L71), et dans chaque premier circuit d'étage de puissance de commutation, une borne du premier élément de stockage d'énergie (Cfl, Cf2, Cf3, Cfj, Cf7) respectif du premier circuit d'étage de puissance de commutation peut être connectée à la masse via un troisième transistor, et est connectée à la deuxième borne (c, m, o1, m2) du convertisseur de puissance via le premier élément magnétique respectif du premier circuit d'étage de puissance de commutation.

2. Convertisseur de puissance selon la revendication 1, dans lequel des paramètres de stockage d'énergie de premiers éléments de stockage d'énergie (Cfl, Cf2, Cf3, Cfj, Cf7) des N premiers circuits d'étage de puissance de commutation (11, 41, 42, 61, 62, 6j, ..., 6N, 71) et des N deuxièmes éléments de stockage d'énergie (Cil, Ci2, Ci3, Ci7, ..., CiN) sont réglés pour commander les N premiers circuits d'étage de puissance de commutation (11, 41, 42, 61, 62, 6j, ..., 6N, 71) afin de respecter la balance volt-seconde d'inductance.

3. Convertisseur de puissance selon la revendication 1, dans lequel dans un cas où N est supérieur à 1, un $n^{ième}$ premier circuit d'étage de puissance de commutation parmi les N premiers circuits d'étage de puissance de commutation (11, 41, 42, 61, 62, 6j, ..., 6N, 71) est couplé entre une borne d'un $(n-1)^{ième}$ deuxième élément de stockage d'énergie (Cil, Ci2, Ci3, Ci7, ..., CiN) parmi les N deuxièmes éléments de stockage d'énergie (Cil, Ci2, Ci3, Ci7, ..., CiN) et la deuxième borne (c, m, o1, m2) du convertisseur de puissance, et un $j^{ième}$ deuxième élément de stockage d'énergie (Cil, Ci2, Ci3, Ci7, ..., CiN) parmi les N deuxièmes éléments de stockage d'énergie (Cil, Ci2, Ci3, Ci7, ..., CiN) est couplé entre un $j^{ième}$ premier circuit d'étage de puissance de commutation parmi les N premiers circuits d'étage de puissance de commutation (11, 41, 42, 61, 62, 6j, ..., 6N, 71), et la masse, dans lequel n = 2, 3,..., N, et j = 1, 2, ..., N.

4. Convertisseur de puissance selon la revendication 1, dans lequel le troisième transistor est remplacé par une diode.

5. Convertisseur de puissance selon la revendication 1, dans lequel le deuxième circuit d'étage de puissance de commutation (12, 43, 6a, 72) comprend :

   un quatrième transistor et un cinquième transistor qui sont connectés entre le deuxième élément de stockage d'énergie (Cil, Ci2, Ci3, Ci7, ..., CiN) correspondant au deuxième circuit d'étage de puissance de commutation (12, 43, 6a, 72) et la masse ; et
   un deuxième élément magnétique connecté entre la deuxième borne (c, m, o1, m2) du convertisseur de puissance et une borne qui est une borne commune entre le quatrième transistor et le cinquième transistor.

6. Convertisseur de puissance selon la revendication 1, dans lequel

   la première borne (a, z, m1, o2) du convertisseur de puissance est configurée comme une borne d'entrée du convertisseur de puissance pour recevoir une tension d'entrée, et la deuxième borne (c, m, o1, m2) du convertisseur de puissance est configurée comme une borne de sortie du convertisseur de puissance pour générer une tension de sortie ; ou
   la deuxième borne (c, m, o1, m2) du convertisseur de puissance est configurée comme une borne d'entrée du convertisseur de puissance pour recevoir une tension d'entrée, et la première borne (a, z, m1, o2) du convertisseur de puissance est configurée comme une borne de sortie du convertisseur de puissance pour générer une tension de sortie.

7. Convertisseur de puissance selon la revendication 5, dans lequel le convertisseur de puissance est configuré pour réaliser une commande de déphasage sur des états de fonctionnement des N premiers circuits d'étage de puissance de commutation (11, 41, 42, 61, 62, 6j, ..., 6N, 71) et du deuxième circuit d'étage de puissance de commutation (12, 43, 6a, 72).

8. Convertisseur de puissance selon la revendication 7, dans lequel

le deuxième transistor de chacun des N premiers circuits d'étage de puissance de commutation (11, 41, 42, 61, 62, 6j, ..., 6N, 71) a un même rapport cyclique que le quatrième transistor ;
un état de commutation du deuxième transistor est complémentaire à un état de commutation du troisième transistor ;
un état de commutation du quatrième transistor est complémentaire à un état de commutation du cinquième transistor ;
un état de commutation d'un $j^{ième}$ premier transistor parmi les N premiers transistors est complémentaire à un état de commutation d'un troisième transistor d'un $j^{ième}$ premier circuit d'étage de puissance de commutation parmi les N premiers circuits d'étage de puissance de commutation (11, 41, 42, 61, 62, 6j, ..., 6N, 71), dans lequel j = 1, 2, 3, ..., N ; et
le convertisseur de puissance est configuré pour régler le rapport cyclique du deuxième transistor pour générer une tension de sortie stabilisée.

9. Convertisseur de puissance selon la revendication 8, dans lequel dans un cas où N est supérieur à 1, il y a une même différence de phase entre des synchronisations de conduction de deuxièmes transistors adjacents parmi les N deuxièmes transistors, et il y a la même différence de phase entre une synchronisation de conduction d'un $N^{ième}$ deuxième transistor parmi les N deuxièmes transistors et une synchronisation de conduction du quatrième transistor.

10. Convertisseur de puissance selon la revendication 9, dans lequel la différence de phase est 360°/(N+1).

11. Convertisseur de puissance selon la revendication 5, dans lequel le convertisseur de puissance est configuré pour réaliser une commande en phase sur des états de fonctionnement des N premiers circuits d'étage de puissance de commutation (11, 41, 42, 61, 62, 6j, ..., 6N, 71) et du deuxième circuit d'étage de puissance de commutation (12, 43, 6a, 72).

12. Convertisseur de puissance selon la revendication 11, dans lequel

   le deuxième transistor de chacun des N premiers circuits d'étage de puissance de commutation (11, 41, 42, 61, 62, 6j, ..., 6N, 71) a un même état de commutation que le quatrième transistor ;
   le troisième transistor de chacun des N premiers circuits d'étage de puissance de commutation (11, 41, 42, 61, 62, 6j, ..., 6N, 71) a un même état de commutation que les N premiers transistors et le cinquième transistor, et l'état de commutation du troisième transistor est complémentaire à un état de commutation du deuxième transistor ; et

le convertisseur de puissance est configuré pour régler un rapport cyclique du deuxième transistor pour générer une tension de sortie stabilisée.

13. Convertisseur de puissance selon la revendication 5, dans lequel au moins un des premiers éléments magnétiques des N premiers circuits d'étage de puissance de commutation (11, 41, 42, 61, 62, 6j, ..., 6N, 71) est couplé au deuxième élément magnétique ; et/ou

au moins deux des premiers éléments magnétiques des N premiers circuits d'étage de puissance de commutation (11, 41, 42, 61, 62, 6j, ..., 6N, 71) sont couplés l'un à l'autre.

**Figure 1**

**Figure 2**

**Figure 3**

**Figure 4**

**Figure 5**

**Figure 6**

**Figure 7**

**Figure 8**

**Figure 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150002115 A1
- US 20170019014 A1